# EUROPEAN PATENT APPLICATION

(11) **EP 4 564 786 A1**
(43) Date of publication of application: **04.06.2025**
(21) Application number: 23858895.8
(22) Date of filing: 29.06.2023
(51) Int. Cl.: H04L 67/60

(54) **DATA TRANSMISSION METHOD AND APPARATUS**

(30) Priority: 30.08.2022 CN 202211047101
(71) Applicant: Huawei Technologies Co., Ltd., Shenzhen, Guangdong 518129 (CN)
(72) Inventor: WU, Changye, Shenzhen, Guangdong 518129 (CN); HUANG, Liming, Shenzhen, Guangdong 518129 (CN); LU, Zhihao, Shenzhen, Guangdong 518129 (CN); REN, Yuxin, Shenzhen, Guangdong 518129 (CN); ZHU, Di, Shenzhen, Guangdong 518129 (CN)
(74) Representative: Körber, Martin Hans
(86) International application number: PCT/CN2023/104096
(87) International publication number: WO 2024/045857

(57) **Abstract**

Embodiments of this application provide a data transmission method and apparatus. The method is applied to a communication process between a first service and a second service, and a protocol stack invoked by the first service performs the following steps: obtaining first application information of a service packet transmitted between the first service and the second service, where the first application information includes application layer information; and processing the service packet based on the first application information and a first control policy library, where the first control policy library indicates a manner for processing the service packet. According to solutions in embodiments of this application, application-oriented link-associated management and control can be implemented in a data transmission process. This ensures service access experience.

## Description

This application claims priority to Chinese Patent Application No. 202211047101.5, filed with the China National Intellectual Property Administration on August 30, 2022 and entitled "DATA TRANSMISSION METHOD AND APPARATUS", which is incorporated herein by reference in its entirety.

### TECHNICAL FIELD

Embodiments of this application relate to the field of network communications, and more specifically, to a data transmission method and apparatus.

### BACKGROUND

In a network communication process, a module working at a lower layer (for example, a transport layer) of a network protocol stack usually cannot perceive application information at an upper layer (for example, an application layer). In an application-oriented communication scenario, application-related information needs to be used to process data. Currently, this is implemented by hijacking traffic to standalone software in a sidecar (sidecar) manner. In this manner, a delay increases, and user experience is affected.

Traffic management is used as an example. A layer 4 management manner is mainly to perform traffic management based on an internet protocol (internet protocol, IP) address, port information, and the like, and does not involve application information above the transport layer. Therefore, a current application-oriented management requirement cannot be met. A layer 7 management manner is to hijack traffic between different services to management software. The management software performs traffic management based on protocol information, an IP address, and port information at the application layer, and establishes a communication link between the service and the management software based on a management result to implement data transmission. In the foregoing manner, an original sidelink between the services is changed to three communication links. Consequently, a delay greatly increases, and service access experience is affected.

### SUMMARY

This application provides a data transmission method and apparatus, to implement application-oriented link-associated management and control in a data transmission process. This ensures service access experience.

According to a first aspect, a data transmission method is provided, applied to a communication process between a first service and a second service, where a protocol stack invoked by the first service performs the following steps: obtaining first application information of a service packet transmitted between the first service and the second service, where the first application information includes application layer information; and processing the service packet based on the first application information and a first control policy library, where the first control policy library indicates a manner for processing the service packet.

According to the solution in this embodiment of this application, in the protocol stack, the service packet may be processed based on the application layer information and a related control policy, that is, the application layer information is used as reference information to determine a specific operation manner for the service packet. A more comprehensive determining basis is provided for processing the service packet, application-oriented management and control are implemented. According to the solution in this embodiment of this application, application-oriented link-associated management and control can be implemented in a data transmission process, and no additional communication link needs to be established in a system. This improves management and control effect and avoids an extra delay introduced due to management and control, and ensures service access experience.

For example, the method may be performed by a transport layer in the protocol stack. The service packet may be data obtained by the transport layer. The service packet may also be referred to as service data, a message, a packet, or the like.

The application layer information may include related information of an application layer protocol. For example, the related information of the application layer protocol may include at least one of the following: an application protocol type, application protocol header information, or the like.

For example, the first application information may further include other information. For example, the first application information may further include related information of a transport layer protocol or related information of a network layer protocol.

With reference to the first aspect, in a possible implementation of the first aspect, before the obtaining a service packet transmitted between the first service and the second service, the method further includes: obtaining a link establishment request initiated by the first service, where the link establishment request is used to request to establish a communication link between the first service and the second service; and returning link establishment success indication information to the first service, where before the link establishment success indication information is returned to the first service, no communication link is established between the first service and the second service.

According to the solution in this embodiment of this application, in a service access process, when a service initiates a link establishment request, the protocol stack returns link establishment success indication information, spoofing the first service that a link is successfully established, so that the first service sends the service packet. In this way, a real link establishment occasion is postponed to a sending phase of the service packet. In the sending phase of the service packet, the protocol stack may obtain application layer information of the service packet, and perform addressing based on the application layer information, for example, determine, based on the application layer information, whether to perform a link establishment action, or whether link information needs to be adjusted. In this way, application-oriented management and control are implemented.

With reference to the first aspect, in a possible implementation of the first aspect, the obtaining a link establishment request initiated by the first service includes: obtaining the link establishment request initiated by the first service by using a communication socket, and the method further includes: marking the communication socket as a first state, where the first state indicates that no communication link is established between the first service and the second service.

With reference to the first aspect, in a possible implementation of the first aspect, the processing the service packet based on the first application information and a first control policy library includes: establishing the communication link between the first service and the second service when the first application information meets a first rule in the first control policy library, where the first rule indicates that the first service is allowed to access the second service, and the communication link is used to transmit the service packet.

According to the solution in this embodiment of this application, in the protocol stack, whether the first service is allowed to access the second service may be determined based on the application layer information and the first rule, that is, the application layer information is used as reference information to determine whether service access can be implemented. Application-oriented service access management and control are implemented.

With reference to the first aspect, in a possible implementation of the first aspect, the establishing the communication link between the first service and the second service when the first application information meets a first rule in the first control policy library includes: when the first application information meets the first rule and a second rule in the first control policy library, adjusting the service packet according to the second rule, where the second rule indicates to adjust the service packet; and establishing the communication link between the first service and the second service, where the communication link is used to transmit the adjusted service packet.

According to the solution in this embodiment of this application, in the protocol stack, whether the service packet needs to be adjusted may be determined based on the application layer information and the second rule, that is, the application layer information is used as reference information to determine whether the service packet needs to be adjusted in a service access process. Application-oriented service access management and control effect is improved.

For example, the first service may implement data transmission by using a communication socket. The communication socket includes link information of the service packet. When the first application information meets the second rule, the communication socket may be adjusted according to the second rule, and the communication link is established between the first service and the second service based on the adjusted socket.

With reference to the first aspect, in a possible implementation of the first aspect, after establishment of the communication link is completed, a first state of the communication socket is cleared.

With reference to the first aspect, in a possible implementation of the first aspect, the processing the service packet based on the first application information and a first control policy library includes: returning first error information to the first service when the first application information does not meet the first rule, where the first error information indicates that the service packet cannot be sent to the second service.

With reference to the first aspect, in a possible implementation of the first aspect, the returning link establishment success indication information to the first service includes: extracting second application information of the link establishment request, where the second application information includes link information of the link establishment request; and returning the link establishment success indication information to the first service when a second control policy library includes a third rule, where the third rule is related to the second application information.

With reference to the first aspect, in a possible implementation of the first aspect, the returning link establishment success indication information to the first service when a second control policy library includes a third rule includes: returning the link establishment success indication information to the first service when the second application information meets the third rule.

With reference to the first aspect, in a possible implementation of the first aspect, when the second application information does not meet the third rule, link establishment failure indication information is returned to the first service.

With reference to the first aspect, in a possible implementation of the first aspect, the service packet is sent by the first service to the second service, and the processing the service packet based on the first application information and a first control policy library includes: when no response information of the service packet is received from the second service within a first time period, performing at least one of the following operations based on the first application information and the first control policy library: performing a retransmission operation on the service packet; or returning second error information to the first service, where the second error information indicates that no response information of the service packet is received.

In this embodiment of this application, the first application information includes the application layer information. In a data retransmission scenario, the protocol stack may use the application layer information as reference information to determine a specific operation manner for the service packet. This provides a more comprehensive determining basis for processing the service packet, and helps improve accuracy of a manner of processing the service packet. In this way, application-oriented retransmission processing can be implemented without establishing an additional communication link in the system. This improves accuracy of the service packet processing manner without introducing an additional delay, and ensures service access experience.

With reference to the first aspect, in a possible implementation of the first aspect, the service packet is sent by the second service to the first service, and the processing the service packet based on the first application information and a first control policy library includes: when sequence numbers of the service packets are out of order, performing at least one of the following operations based on the first application information and the first control policy library: reassembling the sequence numbers or discarding the service packets.

In this embodiment of this application, the first application information includes the application layer information. In an out-of-order reassembly scenario, the protocol stack may use the application layer information as reference information to determine a specific operation manner for the service packet. This provides a more comprehensive determining basis for processing the service packet, and helps improve accuracy of a manner of processing the service packet. In this way, application-oriented reassembly processing can be implemented without establishing an additional communication link in the system. This improves accuracy of the service packet processing manner without introducing an additional delay, and ensures service access performance.

With reference to the first aspect, in a possible implementation of the first aspect, the first control policy library includes a traffic management rule.

According to a second aspect, a data transmission apparatus is provided, and is used in a communication process between a first service and a second service. The apparatus may include a protocol stack invoked by the first service. The protocol stack includes a first obtaining unit and a first processing unit. A first transceiver unit is configured to obtain first application information of a service packet transmitted between the first service and the second service, where the first application information includes application layer information. A second processing unit is configured to process the service packet based on the first application information and a first control policy library, where the first control policy library indicates a manner for processing the service packet.

Optionally, the protocol stack further includes a second obtaining unit and a second processing unit. The second obtaining unit is configured to: before the first obtaining unit obtains the service packet transmitted between the first service and the second service, obtain a link establishment request initiated by the first service, where the link establishment request is used to request to establish a communication link between the first service and the second service. The second processing unit is configured to return link establishment success indication information to the first service, where before the link establishment success indication information is returned to the first service, no communication link is established between the first service and the second service.

Optionally, the first processing unit is specifically configured to: establish the communication link between the first service and the second service when the first application information meets a first rule in the first control policy library, where the first rule indicates that the first service is allowed to access the second service, and the communication link is used to transmit the service packet.

Optionally, the first processing unit is specifically configured to: when the first application information meets the first rule and a second rule in the first control policy library, adjust the service packet according to the second rule, where the second rule indicates to adjust the service packet; and establish the communication link between the first service and the second service, where the communication link is used to transmit the adjusted service packet.

Optionally, the first processing unit is specifically configured to: return first error information to the first service when the first application information does not meet the first rule, where the first error information indicates that the service packet cannot be sent to the second service.

Optionally, the second processing unit is specifically configured to: obtain second application information of the link establishment request, where the second application information includes link information of the link establishment request; and return link establishment success indication information to the first service when a second control policy library includes a third rule, where the third rule is related to the second application information.

Optionally, the second processing unit is specifically configured to: return the link establishment success indication information to the first service when the second application information meets the third rule.

Optionally, the service packet is sent by the first service to the second service, and the first processing unit 1620 is specifically configured to: when no response information of the service packet is received from the second service within a first time period, perform at least one of the following operations based on the first application information and the first control policy library: performing a retransmission operation on the service packet, or returning second error information to the first service, where the second error information indicates that no response information of the service packet is received.

Optionally, the service packet is sent by the second service to the first service, and the first processing unit 1620 is specifically configured to: when sequence numbers of the service packets are out of order, perform at least one of the following operations based on the first application information and the first control policy library: reassembling the sequence numbers or discarding the service packet.

Optionally, the first control policy library includes a traffic management rule.

According to a third aspect, a data transmission apparatus is provided. The apparatus includes: a memory, configured to store a program; and a processor, configured to execute the program stored in the memory, where when the program stored in the memory is executed, the processor is configured to perform the method in any implementation of the first aspect.

According to a fourth aspect, a computer-readable medium is provided. The computer-readable medium stores program code to be executed by a device, and the program code includes instructions used to perform the method in any implementation of the first aspect. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

According to a fifth aspect, a computer program product including instructions is provided. When the computer program product is run on a computer, the computer is enabled to perform the method in any implementation of the first aspect.

According to a sixth aspect, a chip is provided, where the chip includes a processor and a data interface, and the processor reads, by using the data interface, instructions stored in a memory, to perform the method in any implementation of the first aspect. In a specific implementation process, the chip may be implemented in a form of a central processing unit (central processing unit, CPU), a micro controller unit (micro controller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

### BRIEF DESCRIPTION OF DRAWINGS

FIG. 1 is a diagram of a process of data transmission between applications;
FIG. 2 is a diagram of a service mesh data plane in a traffic management scenario in a hijacking architecture;
FIG. 3 is a diagram of a service access process;
FIG. 4 is a diagram of a protocol stack according to an embodiment of this application;
FIG. 5 is a block diagram of a system architecture according to an embodiment of this application;
FIG. 6 is a schematic flowchart of a data transmission method according to an embodiment of this application;
FIG. 7 is a schematic flowchart of a pseudo link establishment process according to an embodiment of this application;
FIG. 8 is a schematic flowchart of another pseudo link establishment process according to an embodiment of this application;
FIG. 9 is a diagram of a data sending process according to an embodiment of this application;
FIG. 10 is a diagram of another data sending process according to an embodiment of this application;
FIG. 11 is a schematic flowchart of a service access process according to an embodiment of this application;
FIG. 12 is a diagram of another data sending process according to an embodiment of this application;
FIG. 13 is a schematic flowchart of a timeout retransmission process according to an embodiment of this application;
FIG. 14 is a schematic flowchart of an out-of-order reassembly process according to an embodiment of this application;
FIG. 15 is a diagram of a structure of a data transmission apparatus according to an embodiment of this application; and
FIG. 16 is a diagram of a structure of another data transmission apparatus according to an embodiment of this application.

### DESCRIPTION OF EMBODIMENTS

The following describes technical solutions of embodiments in this application with reference to accompanying drawings.

To better describe solutions in embodiments of this application, the following describes related terms that may be used in embodiments of this application.

### (1) Service mesh (service mesh)

The service mesh is a next-generation cloud-native architecture and an infrastructure layer for interservice communication. The service mesh is used for a complex service topology that forms a cloud-native application to achieve reliable delivery of requests.

### (2) Sidecar (sidecar)

The sidecar is a design mode in which an application function is separated from an application as an independent process. The sidecar allows a function to be added to the application without intrusion, to avoid adding extra code to the application to meet a third-party requirement. For example, in the service mesh, traffic management, authentication, or the like can be separated as an independent sidecar process.

### (3) Network protocol stack

The network protocol stack may also be referred to as a protocol stack. The protocol stack may be an open system interconnection reference model (open system interconnection reference model, OSI) protocol stack or a transmission control protocol/internet protocol (transmission control protocol/internet protocol, TCP/IP) protocol stack.

The OSI protocol stack includes the following layers from bottom to top: a physical layer, a link layer, a network layer, a transport layer, a session layer, a presentation layer, and an application layer. The TCP/IP protocol stack includes the following layers from bottom to top: a host-to-network layer, a network interconnection layer, a transport layer, and an application layer.

An application may invoke a protocol stack in an operating system by using a socket (socket) to send data.

The socket is a basic operation unit that supports TCP/IP network communication. The socket is an abstract representation of an endpoint during network communication, and includes the following information required for network communication: a protocol used for connection, an IP address of a local host, a protocol port of a local process, an IP address of a remote host, and a protocol port of a remote process. The socket can be considered as an endpoint in a communication connection between two applications. One application writes a segment of information into the socket, and the socket sends the segment of information to the other socket, so that the segment of information can be transmitted to the other application.

Two applications that need to communicate with each other create sockets by invoking the protocol stack. The application can invoke a socket program to complete the operation. After the sockets of the two parties are created, the application invokes the protocol stack to connect the sockets of the two parties. The application may invoke a connect (connect) program to enable the protocol stack to execute a link establishment process to complete the operation.

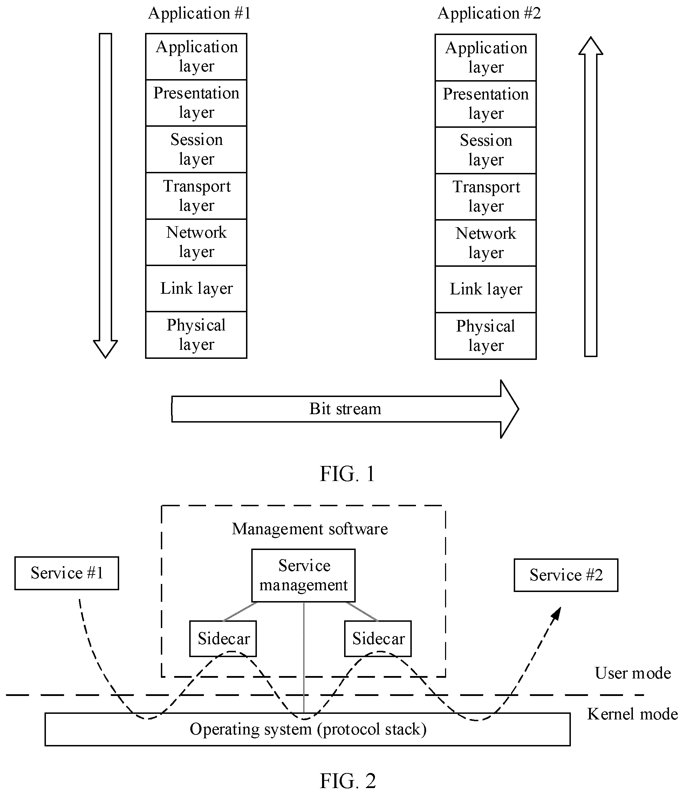

FIG. 1 is a diagram of a process of data transmission between applications.

After sockets of the two parties are connected, the application sends data to a socket to implement data transmission. An application #1 sends data to a protocol stack through a socket, and the protocol stack executes a message sending process to implement data transmission. Each layer in the protocol stack can encapsulate received data with corresponding protocol information. As shown in FIG. 1, data is processed layer by layer from top to bottom in the protocol stack until the data is sent to a network. An application #2 at the peer end may invoke the protocol stack to receive the data in the network. The data received from the network is processed layer by layer from bottom to top in the protocol stack until the data is sent to the corresponding application #2.

### (4) Traffic management

A core of the traffic management is to resolve a problem for efficient communication between services, so as to ensure service access experience.

The traffic management includes load balancing, routing, access control list (access control list, ACL), rate limiting, circuit breaking, fallback, and retry.

With evolution of a microservice architecture, the traffic management presents two development trends. One is application-oriented management, that is, logic of the traffic management is closely related to application information (for example, an application protocol), so that traffic management policies are increasingly diversified. The traffic management policy may also be referred to as a traffic management rule. The other is that infrastructure of traffic management is decoupled from an application. In this way, the application is lighter and development of the application can focus on innovation of functions of the application.

The traffic management can be implemented in the following manners:

### (1) Implement traffic management through a hardware load balancer

The hardware-based traffic management manner supports limited protocol types and has low flexibility, high device costs, and undiversified balancing nodes. This cannot meet complex application traffic management requirements.

### (2) Implement layer 4 traffic management at a transport layer

N layer traffic management refers to traffic management implemented based on application information at an N^{th} layer and layers below the N^{th} layer in a network protocol stack. N is a positive integer.

Layer 2 traffic management is traffic management implemented based on application information at a link layer and layers below the link layer in the network protocol stack. For example, traffic management is implemented based on a media access control (media access control, MAC) address.

Layer 3 traffic management is traffic management implemented based on application information at a network layer and layers below the network layer in the network protocol stack. For example, traffic management is implemented based on an IP address.

Layer 4 traffic management is traffic management implemented based on application information at a transport layer and layers lower than the transport layer in the network protocol stack. For example, traffic management is implemented based on an IP address and a port (port).

For a traffic management manner of a layer 4 and below the layer 4, application information (for example, protocol information of an application layer) above the layer 4 cannot be perceived, and an application management-oriented requirement cannot be met.

### (3) Implement layer 4 or layer 7 traffic management at an application layer

Layer 7 traffic management is traffic management implemented based on application information at the application layer and layers below the application layer in the network protocol stack. For example, traffic management is implemented based on a host (host), a uniform resource locator (uniform resource locator, URL) prefix (prefix), a domain (domain), and the like.

Currently, layer 7 traffic management is usually implemented based on a hijacking architecture, that is, traffic is hijacked to independent management software. A service mesh is used as an example. A delay of each hop of service access increases by 2 ms to 3 ms. This greatly affects service access experience and cannot meet requirements of communication scenarios with high real-time requirements, such as live broadcast and games. In a high-concurrency reliability system, the delay increases more seriously.

### (5) ACL

The ACL is a group of IP address ranges or network segments, and is used to control a user to access the network only from IP addresses or the network segments in the ACL. As an access control technology based on packet filtering, the ACL filters a packet on an interface based on a preset condition, to pass or discard the packet. The ACL is widely used for a layer 3 switch and a router. The ACL can be used to effectively control user access to the network and ensure network security to the maximum extent.

### (6) Quality of service (quality of service, QoS)

The QoS refers to an ability that a network can use various basic technologies to provide a better service capability for specified network communication.

As application scenarios become more complex, a software service gradually evolves from a conventional monolithic system to a distributed microservice architecture. A communication problem between services is an important factor that affects service experience. In an application-oriented communication scenario, implementation of a related function is closely related to application information (for example, an application protocol) of a service. Currently, traffic is hijacked to standalone software in a sidecar manner to implement a related function. In this way, infrastructure of the related function is decoupled from an application, and the application is not affected. However, in this manner, a delay increases, and service experience is affected.

The following uses a traffic management scenario as an example.

FIG. 2 is a diagram of a service mesh data plane in a traffic management scenario in a hijacking architecture.

As shown in FIG. 2, in a service mesh, services communicate with each other through a sidecar. An original communication path between the services is a straight-through path. After the sidecar is introduced, the communication path is converted into a three-hop communication path.

For example, a service #1 sends data to a service #2, and the service #1 invokes a protocol stack in an operating system (operating system) to send the data. Management software hijacks traffic to the sidecar and forwards the data to the service #2 based on a management result. The service #2 invokes the protocol stack in the operating system to receive the data from the sidecar.

In FIG. 2, communication between the services needs to be implemented by using a plurality of communication links. In addition, this process further involves a plurality of times of user mode-kernel mode switching, and overheads are high. Consequently, a delay increases.

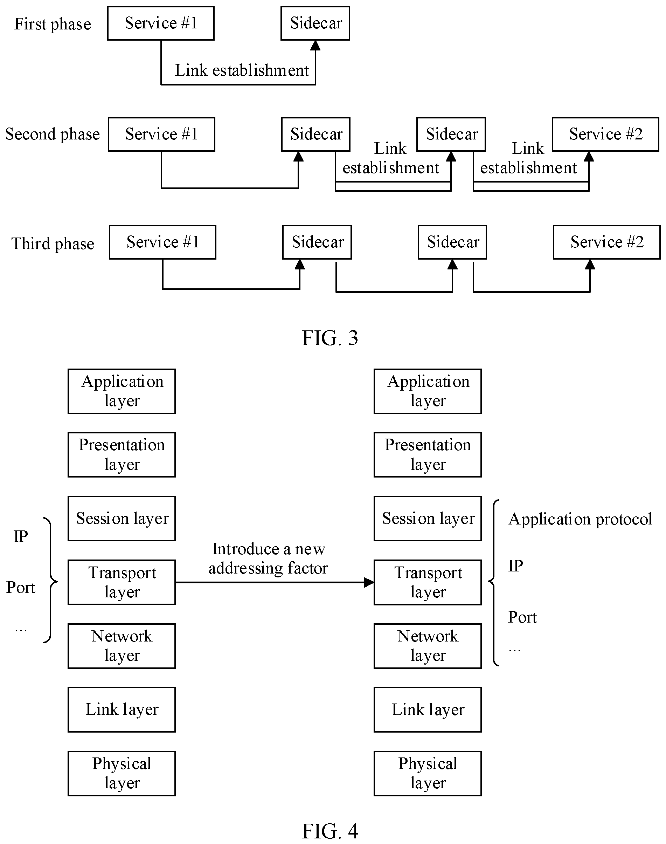

FIG. 3 is a diagram of a service access process. As shown in FIG. 3, access of the service #1 to the service #2 may include the following phases.

In a first phase, that is, a communication request phase, a link establishment request is hijacked to a sidecar node of the service #1. For example, hijacking can be implemented through IP tables (iptables). The sidecar node performs traffic management rule matching based on peer IP address information or port information to determine whether the communication request is valid. If the communication request is valid, the sidecar node establishes a communication link between the service #1 and the sidecar node, and returns a link establishment success message to the service #1. For the service #1, the service #1 considers that a link establishment operation is completed between the service #1 and the service #2.

In a second phase, that is, a first packet sending phase, after receiving the link establishment success message, the service A sends a service packet, that is, a first packet, to the service #2. The service packet is hijacked to the sidecar node corresponding to the service #1. The sidecar node performs traffic management rule matching based on content of the service packet, to determine whether current communication is valid. If the current communication is valid, the sidecar node may search, based on a traffic management rule, a service instance corresponding to the service #2 for a service instance that provides a service for the service #1, that is, search for a real address of the service #2. A communication link is established between the sidecar node of the service #1 and a sidecar node of the service #2 (that is, the sidecar node of the peer end), to adjust link information of the service packet. After receiving the link establishment request, the sidecar node of the service #2 establishes a communication link with the local service (that is, the service #2). In this way, a three-hop communication link between the service #1 and the service #2 is established. The sidecar node of the service #1 forwards the service packet to the service #2 by using the sidecar node of the service #2.

In a third phase, each subsequent service packet (that is, a subsequent packet in the figure) sent by the service #1 to the service #2 may be forwarded to the service #2 by using two sidecar nodes in the figure.

Traffic management is implemented in a sidecar manner, so that infrastructure of the traffic management can be decoupled from an application, and application information (for example, an application protocol) of a service can be fully used. This improves a traffic management effect. However, this manner introduces extra delay overheads, affecting service experience.

For an application-oriented solution, how to implement high-performance communication between services becomes an urgent problem to be resolved.

In view of this, embodiments of this application provide a data transmission method. Related information of an application layer is introduced to a transport layer, and data transmission is implemented based on the related information of the application layer. This can implement high-performance communication between services while decoupling from an application, and improve service experience.

FIG. 4 is a diagram of a protocol stack according to an embodiment of this application.

In a current protocol stack, application information at a transport layer and layers lower than the transport layer is used as an addressing factor of the transport layer. For example, information, such as an IP address and a port, is used as the addressing factor of the transport layer. In other words, the transport layer may determine a communication peer end based on the information, for example, the IP address and the port, to implement data transmission.

In this embodiment of this application, application layer information is introduced to the transport layer as a basis for data processing. For example, as shown in FIG. 4, an application protocol addressing factor is introduced to the transport layer, and is used together with the information, such as the IP address and the port, as the addressing factor of the transport layer. In other words, the transport layer may determine the communication peer end based on the application protocol and information, for example, the IP address and the port, so as to implement data transmission.

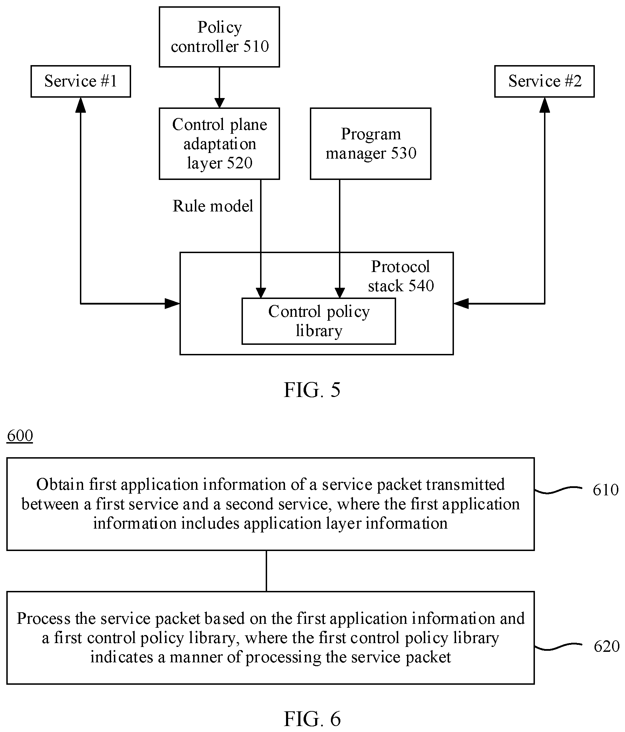

FIG. 5 shows a system architecture according to an embodiment of this application. A system 500 may be configured to perform a data transmission method in embodiments of this application.

As shown in FIG. 5, in the system 500, a protocol stack 540 may be connected to a policy controller 510.

The policy controller 510 may be configured to send a configuration rule, for example, a cluster configuration or a traffic management configuration, to a control plane adaptation layer 520. The control plane adaptation layer 520 may be configured to perform data format conversion on the received configuration rule based on a rule model, to obtain a control policy library. The rule model is used to unify a format of a rule, that is, a rule converted by the rule model can adapt to a corresponding requirement, for example, adapt to a requirement of the protocol stack 540.

A transport layer in the protocol stack 540 may perceive application layer information, and implement data processing in a process of data transmission between services based on the control policy library, that is, complete data processing along with a flow.

For example, the system 500 may further include a program manager 530. The program manager 530 may be configured to manage logic, for example, initialization, loading, or unloading of a related program.

The following uses a traffic management scenario as an example to describe the system 500.

In the traffic management scenario, the policy controller 510 is configured to send a traffic management configuration to the control plane adaptation layer 520. The rule model may also be referred to as a cross-layer QoS model, and is used to unify a format of a traffic management rule, so that the traffic management rule converted by the QoS model can adapt to a requirement of the protocol stack 540. The control plane adaptation layer 520 may be configured to perform data format conversion on the received traffic management configuration based on the cross-layer QoS model, to obtain the control policy library. A rule in the control policy library is used to implement traffic management.

The protocol stack 540 may perceive application layer information at a transport layer, and implement traffic management in a data transmission process based on the control policy library, that is, complete traffic management along with a flow. For example, the protocol stack 540 may be configured to perform a pseudo link establishment process and an addressing process in the following.

The program manager 530 may be configured to manage logic, for example, initialization, loading, or unloading of a traffic management program.

It should be understood that the service #1 may invoke a protocol stack corresponding to the service #1, and the service #2 may invoke a protocol stack corresponding to the service #2. For ease of description, the accompanying drawings in embodiments of this application show only a protocol stack at one end.

It should be noted that the system architecture shown in FIG. 5 is merely an example, and constitutes no limitation on the solutions in embodiments of this application. In actual application, more or fewer modules or components than those in the system architecture shown in FIG. 5 may be included. For example, the system 500 may include only the protocol stack 540. This is not limited in this embodiment of this application.

FIG. 6 is a schematic flowchart of a data transmission method according to an embodiment of this application. A method 600 in FIG. 6 may be executed by a protocol stack. Alternatively, the method 600 may be executed by an application by invoking a protocol stack. The protocol stack may be a user-mode protocol stack. Alternatively, the protocol stack may be a kernel-mode protocol stack. The kernel-mode protocol stack may also be understood as a protocol stack in an operating system. For example, the protocol stack may be the protocol stack shown in FIG. 4.

The method 600 includes step 610 and step 620. The following describes step 610 and step 620.

610: Obtain first application information of a service packet transmitted between a first service and a second service, where the first application information includes application layer information.

620: Process the service packet based on the first application information and a first control policy library, where the first control policy library indicates a manner of processing the service packet.

The first application information may be previously stored, that is, "obtain" in step 610 may be understood as "read". Alternatively, step 610 may be implemented by using step 611 and step 612 (not shown in the figure).

611: Obtain the service packet transmitted between the first service and the second service.

612: Extract the first application information of the service packet.

In embodiments of this application, a "service" may be referred to as an "application" or an "application". For example, the first service may be referred to as a first application or a first application. The second service may also be referred to as a second application or a second application.

Both the first service and the second service may invoke the protocol stack to implement data transmission. For ease of description and understanding, in this embodiment of this application, only an example in which the first service invokes the protocol stack to implement a related function is used for description, and constitutes no limitation on the solutions in this embodiment of this application.

For example, the method 600 may be performed by a transport layer in a protocol stack. The service packet may be data obtained by the transport layer. The service packet may also be referred to as service data, a message, a packet, or the like.

For example, in a scenario in which the first service sends data to the second service, the first service invokes the protocol stack to send the data to the second service. The transport layer in the protocol stack executes a sending process. The service packet may be data received by the transport layer in the sending process.

For another example, in a scenario in which the first service receives data from the second service, the first service invokes the protocol stack to receive the data from the second service. The transport layer in the protocol stack performs a receiving process (that is, a packet receiving process). The service packet may be data received by the transport layer in the receiving process.

The application layer information may include related information of an application layer protocol. The application layer protocol may also be referred to as an application protocol.

For example, the related information of the application layer protocol may include at least one of the following: an application protocol type, application protocol header information, or the like.

For example, the application protocol type may include a hyper text transfer protocol over secure socket layer (hyper text transfer protocol over secure socket layer, HTTPS), a google remote procedure call (google remote procedure call, gRPC) protocol, a hypertext transfer protocol (hypertext transfer protocol, http), a domain name system (domain name system, DNS), a file transfer protocol (file transfer protocol, FTP), a simple mail transfer protocol (simple mail transfer protocol, SMTP), and the like.

For example, the application protocol header information may include http header field information, for example, url, domain, prefix, or hostName of an http header.

For example, the first application information may further include other information. For example, the first application information may further include related information of a transport layer protocol or related information of a network layer protocol.

For example, the related information of the transport layer protocol may include port information.

For example, the related information of the network layer protocol may include IP address information.

For ease of description, in embodiments of this application, the related information of the transport layer protocol or the related information of the network layer protocol is collectively referred to as link information. For example, in step 610, application layer information and link information of the service packet may be obtained.

The method 600 may be applied to different communication scenarios, to implement different tasks. The first control policy library corresponds to the task. For example, if the method 600 is used to improve QoS, the first control policy library indicates a manner of processing the service packet, so as to improve QoS. In this case, the first control policy library may also be referred to as a first QoS library.

Optionally, the first control policy library includes at least one traffic management rule.

In this case, the method 600 may be applied to execute a traffic management task.

For ease of description and description, traffic management is mainly used as an example for description in embodiments of this application, and constitutes no limitation on the solutions in embodiments of this application. The solutions in embodiments of this application may be used for other tasks that need to use the application layer information to implement management and control.

The first control policy library may include one or more rules. A rule may also be referred to as a policy.

For example, step 620 may include: matching the first application information with a rule in the first control policy library, and when the first application information matches at least one rule in the first control policy library, processing the service packet according to a processing manner indicated by the at least one rule.

That the application information matches the at least one rule in the control policy library may be understood as that the control policy library includes at least one rule related to the application information. In other words, that the application information matches the at least one rule in the control policy library may also be understood as that the application information is related to the at least one rule in the control policy library.

Correspondingly, that the first application information matches the at least one rule in the first control policy library may be understood as that the first control policy library includes at least one rule related to the first application information.

For example, that one piece of application information matches one rule may be understood in the following manner. A parameter in the application information includes a parameter related to a condition defined in the rule. For example, the application information includes a protocol type, and a condition in a rule in the control policy library is "the protocol type is http". In this case, the application information matches the rule.

Further, when the first application information meets the at least one rule, the service packet is processed according to the at least one rule.

For example, if one piece of application information meets one rule, it may be understood in the following manner that the application information meets a condition defined in the rule. For example, a protocol type in application information is http, and a condition in a rule is "the protocol type is http". In this case, the application information meets the condition defined in the rule. For another example, a protocol type in application information is gRPC, and a condition in a rule is "the protocol type is http". In this case, the application information does not meet the condition defined in the rule. Correspondingly, that the first application information meets the at least one rule may be understood as that the first application information meets a condition defined by the at least one rule. That the service packet is processed according to the at least one rule may be understood as that the service packet is processed in a processing manner indicated by the at least one rule. In other words, when the first application information meets the condition defined in the at least one rule, the service packet is processed in a processing manner indicated by the at least one rule, or the service packet is processed in a processing manner corresponding to the condition.

For example, if the first application information does not match any rule in the first control policy library, a default processing process may be performed. The default processing process may also be referred to as a regular processing process.

In other words, if there is no rule related to the first application information in the first control policy library, the default processing process may be performed.

The default processing process is related to an application scenario of the method 600.

For example, the method 600 may be used in a scenario in which the first service sends the data to the second service (a scenario 1 below). If the first application information does not match any rule in the first control policy library, a conventional sending process is performed to transmit the data of the first service to the second service. For example, the first control policy library includes a traffic management rule. If the first application information does not match any rule in the first control policy library, the protocol stack may not perform traffic management, and the conventional sending process is performed.

For example, the method 600 is applied to a data retransmission scenario (a scenario 2 below). If the first application information does not match any rule in the first control policy library, a conventional retransmission process is performed.

For example, the method 600 is applied to an out-of-order reassembly scenario (a scenario 3 below). If the first application information does not match any rule in the first control policy library, a conventional out-of-order reassembly process is performed.

According to the solution in this embodiment of this application, the service packet may be processed in the protocol stack based on the application layer information and a related control policy, to implement application-oriented management and control. According to the solution in this embodiment of this application, application-oriented link-associated management and control can be implemented in a data transmission process, and no additional communication link needs to be established in a system. This improves management and control effect and avoids an extra delay introduced due to management and control, and ensures service access performance. For example, in a scenario in which management and control are not performed, one communication link may be established between the first service and the second service to implement data transmission. After the solution in this embodiment of this application is used, only one communication link may be established between the first service and the second service to implement data transmission, and management and control are also implemented.

In addition, the solution in this embodiment of this application is transparent to the service, that is, the service is unaware of the process, and normal access to the service is not affected.

For example, the first control policy library may include a traffic management rule. In the solution in this embodiment of this application, layer 7 traffic management may be completed in the protocol stack based on the application layer information, and effective traffic management can be implemented by using various traffic management policies related to an application. This meets an application-oriented traffic management requirement. In addition, in the solutions in embodiments of this application, no additional communication link needs to be introduced between services. In other words, a traffic management task may be implemented through original communication between the services. This ensures communication efficiency between the services while implementing traffic management, avoids an extra delay caused by traffic management, and helps improve service access performance.

To better describe the solutions in embodiments of this application, the following describes the solutions in embodiments of this application with reference to several common communication scenarios (a scenario 1, a scenario 2, and a scenario 3).

### Scenario 1

The scenario 1 is a communication scenario in which the first service accesses the second service. In this scenario, the service packet may be data sent by the first service to the second service.

In some communication scenarios, for example, in a communication scenario in which the transport layer protocol is a TCP protocol, data transmission between services needs to be implemented based on a communication link. For example, the first service sends the data to the second service. If no communication link is established between the first service and the second service before the first service sends the data to the second service, the first service first initiates communication, to establish the communication link between the first service and the second service. For example, if the service packet in step 610 and step 620 is data sent by the first service to the second service for the first time, before step 610 and step 620 are performed, a communication link needs to be first established between the first service and the second service, and then the data is transmitted by using the communication link.

In the solution in this embodiment of this application, in response to a communication request initiated by the first service, the protocol stack notifies the first service that a link is successfully established but the communication link is not established.

Optionally, the method 600 further includes step 601 and step 602 (not shown in FIG. 6).

601: Obtain a link establishment request initiated by the first service, where the link establishment request is used to request to establish a communication link between the first service and the second service.

602: Return link establishment success indication information to the first service. Before the link establishment success indication information is fed back to the first service, no communication link is established between the first service and the second service.

"Link establishment" is to establish a communication link. In step 602, the protocol stack returns, to the first service in response to the link establishment request, indication information indicating that the communication link has been established, but actually the communication link is not established.

When the link establishment success indication information is returned to the first service, there is no communication link established between the first service and the second service in response to the link establishment request.

When initiating communication to the second service, the first service invokes the protocol stack to execute a link establishment process. The protocol stack "spoofs" the first service in a pseudo link establishment manner that the link has been established successfully, so that the first service considers that the communication link between the first service and the second service has been established, and may send the data to the second service. However, actually, no communication link is established in the system.

Further, in step 601, the link establishment request initiated by the first service by using the communication socket is obtained. In step 602, the communication socket may be marked as being in a first state. The first state indicates that no communication link is established between the first service and the second service.

Specifically, the first service creates the communication socket, and invokes the protocol stack to request to connect the communication socket of the first service and a communication socket of the second service, that is, requests to establish the communication link between the first service and the second service. For example, the first service may invoke a connect interface from a virtual IP (virtual IP, VIP) address of the second service; and the protocol stack performs step 601 and step 602 in response to the invoking of the connect interface by the first service.

For example, the first state may be referred to as a pseudo link establishment state.

As an example, that the communication socket is marked as being in the first state may be that a pseudo link establishment flag is extended in a communication socket data structure to indicate that the communication socket is in the pseudo link establishment state; or an original field in the communication socket data structure may be marked as being in the pseudo link establishment state. This is not limited in this embodiment of this application.

That the communication socket is in the pseudo link establishment state may also be understood as that a communication link corresponding to the socket is in the pseudo link establishment state, that is, no real communication link is established in this case.

Optionally, step 602 includes: extracting second application information of a link establishment request, and returning link establishment success indication information to the first service when a second control policy library includes a third rule. The second application information includes link information. The third rule is related to the second application information.

In other words, step 602 includes: extracting the second application information of the link establishment request, and returning the link establishment success indication information to the first service. Before the link establishment success indication information is returned to the first service, the second control policy library includes the third rule.

For example, the link information may include IP address information, port information, or the like.

The second control policy library may include one or more rules.

The third rule is related to the second application information, that is, the third rule matches the second application information. "Third" in the "third rule" is merely used to limit a rule related to the second application information in the second control policy library, and has no other limiting function. In other words, the third rule may be any rule related to the second application information in the second control policy library. In the second control policy library, all rules related to the second application information may be referred to as third rules.

The second control policy library may include one third rule, or may include a plurality of third rules.

In other words, the second application information is matched with a rule in the second control policy library, and when the second application information matches at least one rule in the second control policy library, link establishment success indication information is returned to the first service.

For example, that the second application information matches the third rule may be understood in the following manner. A parameter in the second application information includes a parameter related to the third rule. For example, the second application information includes an IP address, and an IP address-related rule in the second control policy library may be used as the third rule.

Further, if the second application information does not match any rule in the second control policy library, a default link establishment process may be performed. For example, the default link establishment process may be establishing the communication link between the first service and the second service. For another example, the default link establishment process may be establishing a communication link to an agent program.

In other words, if the second control policy library does not include the rule related to the second application information, the default link establishment process may be performed. For example, the communication link is established between the first service and the second service by using a connect process.

Optionally, the second control policy library includes at least one traffic management rule. For example, the second control policy library may include a flow limiting rule, a service listening rule, or the like.

In this case, the method 600 may be used to execute a traffic management task.

For example, if the second application information does not match any traffic management rule in the second control policy library, traffic management is not performed in the protocol stack, and the default link establishment process is performed. For example, the communication link is established between the first service and the second service based on link information of the link establishment request.

It should be noted that the first control policy library and the second control policy library may be the same or different. That the first control policy library is the same as the second control policy library may be understood as that all rules in the first control policy library are the same as all rules in the second control policy library. That the first control policy library is different from the second control policy library may be understood as that the rules in the first control policy library are not completely the same as the rules in the second control policy library.

Optionally, the returning link establishment success indication information to the first service when a second control policy library includes a third rule includes: returning link establishment success indication information to the first service when the second application information meets the third rule.

In other words, the link establishment success indication information is returned to the first service. The second application information meets the third rule before the link establishment success indication information is returned to the first service.

Further, link establishment failure indication information is returned to the first service when the second application information does not meet the third rule.

The link establishment failure indication information may also be understood as access failure indication information.

In other words, the link establishment failure indication information is fed back to the first service. The second application information does not meet the third rule before the link establishment failure indication information is returned to the first service.

That the second application information meets the third rule may also be referred to as a check success. That the second application information does not meet the third rule may also be referred to as a check fail.

For example, if the second control policy library includes a plurality of third rules, the link establishment success indication information may be returned to the first service when the second application information meets conditions defined in all the third rules; or the link establishment failure indication information may be returned to the first service when the second application information does not meet conditions defined in all the third rules.

In a possible implementation, when the method 600 includes step 601 and step 602, after receiving the link establishment success indication information, the first service may send data to the second service. The data may be the service packet in step 610.

Step 601 and step 602 may be referred to as a pseudo link establishment process. Step 610 and step 620 may be referred to as a data sending process.

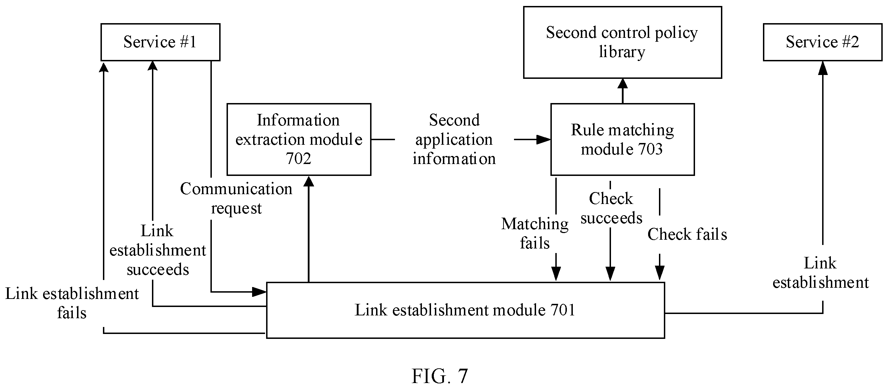

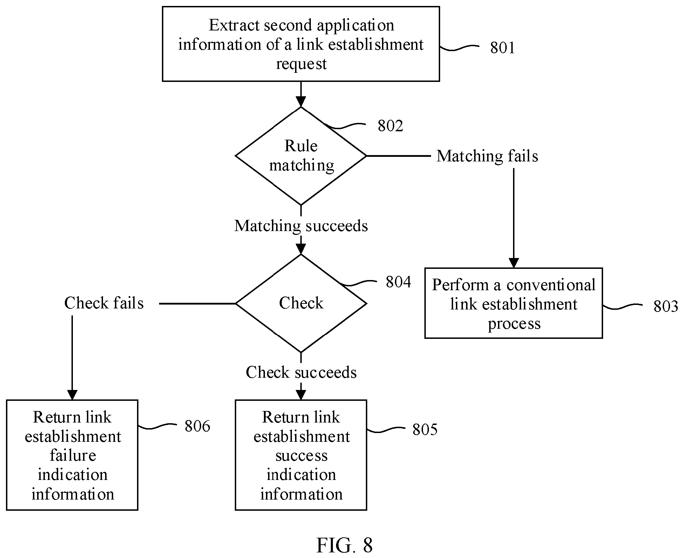

For example, the pseudo link establishment process may be implemented when a pseudo link establishment logic (that is, step 602) is added to a connect link establishment process. Refer to FIG. 7 or FIG. 8 below. For example, in the link establishment process, the foregoing rule matching is performed based on link information, and whether to perform a link establishment action is determined based on a matching result.

In an example, the pseudo link establishment process may be implemented when an extended berkeley packet filter (extended berkeley packet filter, ebpf) program that can implement the pseudo link establishment logic is mounted in the current link establishment process.

In a possible implementation, the foregoing pseudo link establishment process may be performed in a scenario in which management and control need to be performed by using the application layer information. In a scenario in which information at a transport layer and layers lower than a protocol layer needs to be used for management and control, the service packet may be processed based on the second application information and the second control policy library, for example, whether to establish a communication link and whether the service packet needs to be modified are determined.

A traffic management scenario is used as an example. When traffic management needs to be performed by using application layer information, that is, when layer 7 traffic management needs to be performed, the foregoing pseudo link establishment process may be performed in the protocol stack, and then traffic management is performed based on application layer information of the service packet and the like. When the information at the transport layer and the layers lower than the protocol layer needs to be used for traffic management, that is, when layer 4 traffic management needs to be performed, traffic management may be performed based on the link information in the protocol stack.

FIG. 7 is a schematic flowchart of a pseudo link establishment process. The process shown in FIG. 7 may be considered as a specific implementation of step 601 and step 602. For specific descriptions, refer to step 601 and step 602. The following describes step 601 and step 602 by using an example with reference to FIG. 7.

As shown in FIG. 7, a protocol stack may include a link establishment module 701, an information extraction module 702, and a rule matching module 703.

For example, all the foregoing modules may be located at a transport layer.

Alternatively, some of the foregoing modules may be located at the transport layer. For example, the link establishment module 701 may be located at the transport layer.

In an example, the plurality of modules may be implemented in a manner of a plurality of processes.

Step 1: A service #1 (an example of a first service) initiates a communication request to a service #2 (an example of a second service). The service #1 creates a communication socket and invokes a connect interface from a VIP address of the service #2. In response to the invocation request, the protocol stack triggers a pseudo link establishment process, and the information extraction module 702 may extract second application information of the link establishment request from the link establishment module 701. The rule matching module 703 performs rule matching on the second application information based on a second control policy library. The link establishment module 701 performs a corresponding operation based on a rule matching result. For example, the protocol stack may specifically perform the following steps.

Step 2: The information extraction module 702 extracts, from the link establishment module 701, second application information of the request, for example, link information.

Step 3: The rule matching module 703 matches the second application information with a rule in a second control policy library.

If no rule is matched, that is, the matching fails, step 4 is performed. If at least one rule (an example of a third rule) is matched, that is, the matching succeeds, step 5 is performed.

Step 4: The rule matching module 703 returns matching failure indication information to the link establishment module 701.

The link establishment module 701 may perform a conventional link establishment process, for example, establish a communication link between the service #1 and the service 2# to implement subsequent packet transmission.

Step 5: The rule matching module 703 checks the second application information according to the at least one matched rule.

If the check succeeds, step 6 is performed. If the check fails, step 8 is performed.

Step 6: The rule matching module 703 returns check success indication information to the link establishment module 701.

Step 7: The link establishment module 701 marks the communication socket as a pseudo link establishment state based on the check success indication information, and returns link establishment success indication information to the service #1.

Step 8: The rule matching module 703 returns check failure indication information to the link establishment module 701.

Step 9: The link establishment module 701 returns link establishment failure indication information to the service #1 based on the check failure indication information.

It should be noted that the service #1 may invoke a protocol stack corresponding to the service #1, and the service #2 may invoke a protocol stack corresponding to the service #2. For ease of description, the accompanying drawings in embodiments of this application show only a protocol stack at one end. FIG. 7 is used as an example. FIG. 7 shows only the protocol stack corresponding to the service #1, and does not show the protocol stack corresponding to the service #2. This does not limit the service #1 and the service #2 to share the protocol stack. In an actual application scenario, the service #1 and the service #2 may share a protocol stack, or may not share a protocol stack. This is not limited in this embodiment of this application.

It should be understood that the modules in FIG. 7 and the operations performed by the modules are merely examples, and constitute no limitation on the solutions in this embodiment of this application. For example, step 601 and step 602 may alternatively be performed by a same module.

FIG. 8 is a schematic flowchart of another pseudo link establishment process according to an embodiment of this application. The process shown in FIG. 8 may be considered as a specific implementation of step 601 and step 602. For specific descriptions, refer to step 601 and step 602. The following describes step 601 and step 602 by using an example with reference to FIG. 8. The process shown in FIG. 8 may be executed by one module.

A service #1 (an example of a first service) initiates a communication request to a service #2 (an example of a second service). The service #1 creates a communication socket and invokes a connect interface from a VIP address of the service #2. In response to the invocation request, a protocol stack triggers a pseudo link establishment process. For example, the protocol stack may specifically perform the following steps.

801: Extract second application information of a link establishment request, for example, link information.

802: Match the second application information with a rule in a second control policy library.

If the matching fails, step 803 is performed. If the matching succeeds, step 804 is performed.

803: Perform a conventional link establishment process. For example, a communication link is established between the service #1 and the service 2# to implement subsequent packet transmission.

804: Check the second application information according to a matching rule.

If the check succeeds, step 805 is performed. If the check fails, step 806 is performed.

805: Return link establishment success indication information to the service #1. The communication socket is marked as being in a pseudo link establishment state.

806: Return link establishment failure indication information to the service #1.

It should be understood that the foregoing is merely a possible implementation of the pseudo link establishment process, and constitutes no limitation on the solution in this embodiment of this application.

When receiving the link establishment success indication information returned in step 602, the first service may send data to the second service. The protocol stack performs step 610 and step 620. In a data sending process, an addressing operation is performed based on first application information, that is, a real address of the second service is determined, or real link information of the service packet is determined. The addressing operation may be implemented through rule matching in the data sending process. In the data sending process, if the rule matching check succeeds, addressing succeeds. After the addressing succeeds, data transmission can be implemented based on the link information. If the rule matching check fails, addressing fails. After the addressing fails, the current data sending process may be ended.

The following specifically describes the data sending process.

For example, step 620 includes: establishing a communication link between the first service and the second service; and transmitting a service packet on the communication link.

When there is no communication link between the first service and the second service, but the first service receives link establishment success indication information, step 620 may be performed in the foregoing manner.

For example, when the communication socket of the first service is marked as being in the first state, step 620 may be performed in the foregoing manner.

Optionally, step 620 includes: when the first application information meets a first rule in a first control policy library, establishing a communication link between the first service and the second service; and transmitting a service packet on the communication link. The first rule is related to the first application information.

The first rule is related to the first application information, that is, the first rule matches the first application information.

In other words, the first application information is checked based on the first rule. When the check succeeds, the communication link is established between the first service and the second service; and the service packet is transmitted on the communication link.

If the first application information meets the first rule, the check succeeds. If the first application information does not meet the first rule, the check fails.

Optionally, the first rule indicates that the first service is allowed to access the second service. That is, the first rule is a rule that is related to the first application information and that indicates that the first service is allowed to access the second service. Specifically, when the first application information meets the first rule, the first rule indicates that the first service is allowed to access the second service.

In other words, the first rule is used to determine whether the first service can communicate with the second service.

In other words, the first rule indicates that sending of the service packet is allowed. That is, the first rule is a rule that is related to the first application information and that indicates that sending of the service packet is allowed. When the first application information meets the first rule, the first service is allowed to send the service packet to the second service.

Further, when the first application information does not meet the first rule, first error information is returned to the first service, where the first error information indicates that the service packet cannot be sent to the second service.

If a service intercommunication rule is not met after the first application information matches the first rule, the first error information is returned to the first service, to indicate that the service packet cannot be sent to the second service.

In other words, the first error information may be used to notify the first service that the communication link cannot be established between the first service and the second service, that is, link establishment failure indication information.

The first control rule library may include one first rule, or may include a plurality of first rules.

For example, step 620 may include: when the first application information meets all first rules in the first control rule library, establishing a communication link between the first service and the second service; and sending a service packet on the communication link.

According to the solution in this embodiment of this application, in the protocol stack, whether the first service is allowed to access the second service may be determined based on the application layer information and the first rule, that is, the application layer information is used as reference information to determine whether service access can be implemented. Application-oriented service access management and control are implemented.

Optionally, step 620 may include: when the first application information meets the first rule and a second rule in the first control policy library, adjusting the service packet according to the second rule, and establishing a communication link between the first service and the second service; and sending the adjusted service packet on the communication link.

The second rule is related to the first application information, that is, the second rule matches the first application information.

Optionally, the second rule indicates to adjust the service packet. That is, the second rule is a rule that is related to the first application information and that indicates to adjust the service packet. Specifically, when the first application information meets the second rule, the service packet is adjusted according to the second rule.

For example, the second rule indicates to modify at least one of the following: link information of the service packet, application layer information of the service packet, or the like.

For example, the second rule indicates to modify the link information of the service packet. When the first application information meets the second rule, the link information of the service packet may be adjusted according to the second rule, and the communication link is established between the first service and the second service based on the adjusted link information.

As described above, the first service may implement data transmission by using a communication socket. The communication socket includes link information of the service packet. When the first application information meets the second rule, the communication socket may be adjusted according to the second rule, and the communication link is established between the first service and the second service based on the adjusted socket.

For example, that the link information of the service packet is adjusted according to the second rule may include that a target second service instance in the second service is determined based on the first application information and the second rule, where the target second service instance is used to provide a service for the first service; and the link information is adjusted based on address information of the target second service instance.

The target second service instance is a peer end that actually provides a service. The target second service instance in the second service is determined based on the first application information and the second rule, that is, a peer end that actually provides the service is addressed based on the first application information and the second rule. The first application information includes the application layer information. In this way, addressing may be implemented in the protocol stack based on the application layer information.

If the first application information meets the first rule but does not meet the second rule, the service packet does not need to be modified, the communication link is established between the first service and the second service based on original link information of the service packet, and the service packet is sent on the communication link.

Optionally, after the establishment of the communication link is completed, the first state of the communication socket may be cleared.

According to the solution in this embodiment of this application, in the protocol stack, whether the service packet needs to be adjusted may be determined based on the application layer information and the second rule, that is, the application layer information is used as reference information to determine whether the service packet needs to be adjusted in a service access process. Application-oriented service access management and control effect is improved.

In the foregoing data sending process, a rule matching process may alternatively be considered as an addressing process based on the application layer information. If the foregoing addressing process is completed at the transport layer, the process may also be referred to as a layer 4 addressing process based on the application layer information, that is, the application layer information and the link information may be jointly used as addressing factors to implement cross-layer addressing, so as to determine the real address of the target service. If the check succeeds during the rule matching, the addressing succeeds. After the addressing succeeds, the communication link can be established and the service packet can be sent.

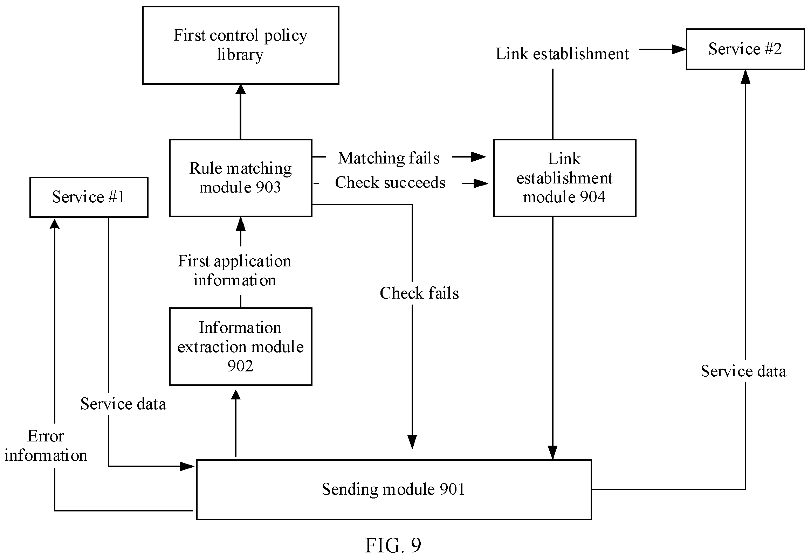

FIG. 9 is a diagram of a data sending process according to an embodiment of this application. Addressing based on application layer information is implemented in the data sending process shown in FIG. 9. The process shown in FIG. 9 may be considered as a specific implementation of step 610 and step 620. For specific descriptions, refer to related descriptions of step 610 and step 620 in the scenario 1. The following provides an example description with reference to FIG. 9.

As shown in FIG. 9, a protocol stack may include a sending module 901, an information extraction module 902, a rule matching module 903, and a link establishment module 904. The information extraction module 902 may be the same as or different from the information extraction module 702 in FIG. 7. The rule matching module 903 may be the same as or different from the rule matching module 703 in FIG. 7. The link establishment module 904 may be the same as or different from the link establishment module 701 in FIG. 7.

For example, all the foregoing modules may be located at a transport layer.

Alternatively, some of the foregoing modules may be located at the transport layer. For example, the sending module 901 and the link establishment module 904 may be located at the transport layer.

In an example, the plurality of modules may be implemented in a manner of a plurality of processes.

Step 1: A service #1 (an example of a first service) sends service data to a service #2 (an example of a second service). The service #1 invokes a send interface. In response to the request, the protocol stack triggers a data sending process. The information extraction module 902 may extract the first application information of the service packet from the sending module 901. The rule matching module 903 performs rule matching on the first application information based on a first control policy library. The link establishment module 904 and the sending module 901 perform corresponding operations based on a rule matching result. For example, the protocol stack may specifically perform the following steps.

Step 2: The information extraction module 902 extracts the first application information, for example, the application layer information, of the service packet from the sending module 901.

Step 3: The rule matching module 903 matches the first application information with a rule in the first control policy library.

If a first rule is not matched, that is, the matching fails, step 4 is performed. If the first rule is matched, that is, the matching succeeds, step 5 is performed.

Step 4: The rule matching module 903 returns matching failure indication information to the link establishment module 904.

The link establishment module 904 may perform a conventional link establishment process, for example, establish a communication link between the service #1 and the service 2# based on link information of the service packet. The sending module 901 may perform a conventional sending process, to send the service packet on the communication link.

Step 5: The rule matching module 903 checks the first application information according to the first rule.

If the check succeeds, step 6 is performed. If the check fails, step 9 is performed.

If the first application information matches a second rule, the first application information may be checked according to the second rule.

Step 6: The rule matching module 903 returns check success indication information to the link establishment module 904.

For example, if the second application information meets the second rule, the link information needs to be adjusted according to the second rule, and the rule matching module 903 may further return the adjusted link information (not shown in the figure) to the link establishment module 904.

Step 7: The link establishment module 904 establishes the communication link between the service #1 and the service #2.

After the communication link is established, a pseudo link establishment state of a socket can be cleared.

Step 8: The sending module 901 may send the service packet on the communication link.

For example, if the second application information meets the second rule, the service packet needs to be adjusted according to the second rule, the rule matching module 903 may further return to-be-adjusted information (not shown in the figure) to the sending module 901.

Step 9: The rule matching module 903 returns check failure indication information to the sending module 901.

Step 10: The sending module 901 returns error information (that is, first error information) to the service #1, and ends the current data sending process.

It should be understood that the modules in FIG. 9 and operations performed by the modules are merely examples, and constitute no limitation on the solutions in this embodiment of this application. For example, step 610 and step 620 may alternatively be performed by a same module.

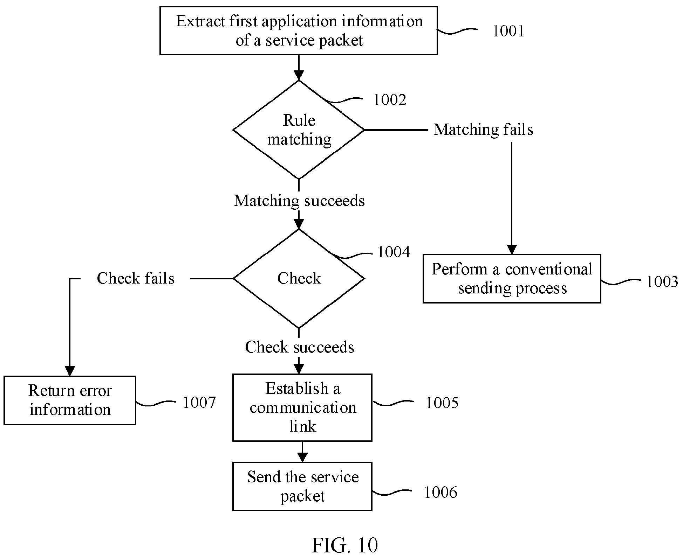

FIG. 10 is a schematic flowchart of another data sending process according to an embodiment of this application. Addressing based on application layer information is implemented in the data sending process shown in FIG. 10. The process shown in FIG. 10 may be considered as a specific implementation of step 610 and step 620. For specific descriptions, refer to the foregoing step 610 and step 620 in the scenario 1. The following describes step 610 and step 620 by using an example with reference to FIG. 10. The process shown in FIG. 10 may be executed by one module.

A service #1 (an example of a first service) sends data to a service #2 (an example of a second service). In response to the request, a protocol stack triggers a data sending process. For example, the protocol stack may specifically perform the following steps.

1001: Extract first application information of a service packet, for example, application layer information and link information.

1002: Match the first application information with a rule in a first control policy library.

If a first rule is not matched, that is, the matching fails, step 1003 is performed. If the first rule is matched, that is, the matching succeeds, step 1004 is performed.

1003: Perform a conventional sending process. For example, a communication link is established between the service #1 and the service 2#, and the service packet is sent on the communication link.

1004: Check second application information according to the first rule.

If the check succeeds, step 1005 is performed. If the check fails, step 1007 is performed.

If the first application information matches a second rule, the first application information may be checked according to the second rule.

1005: Establish the communication link between the service #1 and the service #2.

After the communication link is established, a pseudo link establishment state of a socket can be cleared.

For example, if the second application information meets the second rule, the link information needs to be adjusted according to the second rule, in step 1005, and the communication link (not shown in the figure) may be established between the service #1 and the service #2 based on the adjusted link information.

Step 1006: Send the service packet on the communication link.

For example, if the second application information meets the second rule, the service packet needs to be adjusted according to the second rule, and the service packet sent on the communication link may be the adjusted service packet (not shown in the figure).

1007: The service #1 returns error information (that is, first error information), where the current data sending process is ended.

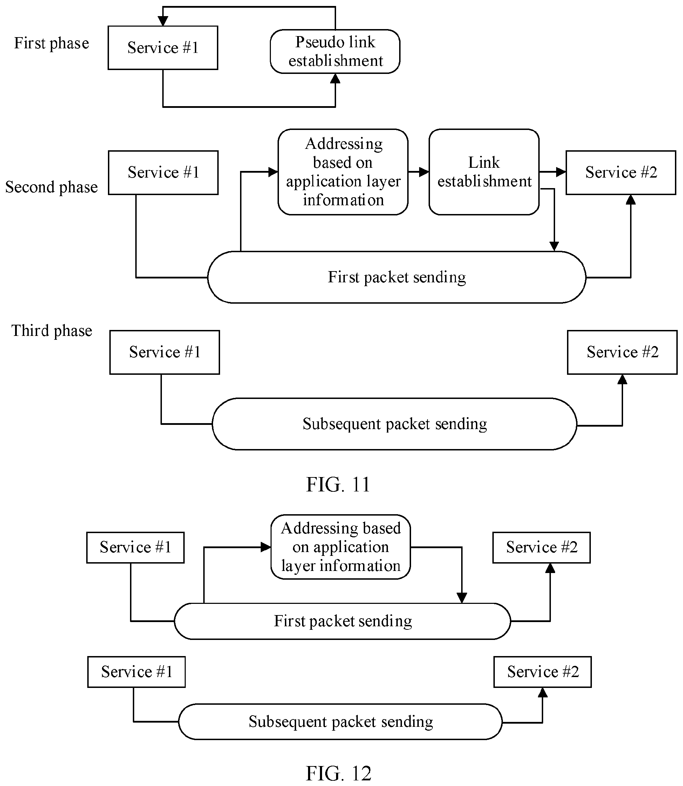

FIG. 11 is a schematic flowchart of a service access process according to an embodiment of this application.

As shown in FIG. 11, service access may include the following three phases.

In a first phase, a communication request is initiated when a service #1 accesses a service #2.

A protocol stack performs a pseudo link establishment process in response to the request.

For example, the protocol stack may determine, based on link information, whether to perform a link establishment operation. If the link information does not match any rule in a control policy library, a conventional link establishment process (not shown in FIG. 11) is performed, and the link establishment operation is performed. If the link information meets a rule that matches the link information, link establishment is not performed, link establishment success indication information is returned, and a pseudo link establishment flag is extended in a socket data structure. A current link is in a pseudo link establishment state. If the link information does not meet the rule that matches the link information, link establishment is not performed, and link establishment failure indication information is returned.

For a specific process, refer to related descriptions of FIG. 6, FIG. 7, or FIG. 8 in the scenario 1. To avoid repetition, details are not described herein again.

In a second phase, the service #1 may send a service packet to the service #2 after receiving the link establishment success indication information.

A first service packet sent after establishment of the communication link is completed may be referred to as an initial packet, and a service packet sent later may be referred to as a subsequent packet. Alternatively, when a service packet is sent, the service packet may also be referred to as an initial packet when a current link is in the pseudo link establishment state, and the service packet may be referred to as a subsequent packet when the current link is a real link.

When the service packet is sent, if the current socket data structure includes the pseudo link establishment flag, a layer 4 addressing operation based on application layer information may be triggered. If the current socket data structure does not include the pseudo link establishment flag, a conventional sending process may be executed to send the service packet on the established communication link.

After the addressing operation based on the application layer information is triggered, the protocol stack may perform rule matching, that is, the addressing operation, based on the application layer information and the link information. After the addressing succeeds, a communication link may be established, and the service packet is sent on the communication link. If the addressing fails, error information (not shown in the figure) may be returned to the service #1, and the sending process ends.

For a specific process, refer to related descriptions of FIG. 6, FIG. 9, or FIG. 10 in the scenario 1. To avoid repetition, details are not described herein again.

In FIG. 11, that the first control policy library and the second control policy library are a same control policy library is merely used as an example, and does not constitute a limitation on the solution in this embodiment of this application.

In a third phase, the subsequent packet is sent. The communication link between the first service and the second service has been established, and data may be transmitted based on a conventional data sending process, as shown in FIG. 11.

Alternatively, when the subsequent packet is sent, step 610 and step 620 may still be performed, so as to process the subsequent packet according to a rule in the first control policy library (not shown in the figure).

Only one communication link may be established between services shown in FIG. 11. Compared with that of the three links in FIG. 3, a delay can be greatly reduced and communication efficiency can be improved.

According to the solution in this embodiment of this application, in the service access process, when a service initiates a link establishment request, the service may be "spoofed" that a link is successfully established, so that the service sends a service packet. In this way, a real link establishment occasion is postponed to a sending phase of the service packet, in the sending phase of the service packet, the protocol stack may obtain application layer information of the service packet, and perform addressing based on the application layer information and the like, for example, determine, based on the application layer information, whether to perform a link establishment action, or whether link information needs to be adjusted, so as to implement application-oriented management and control.

It should be understood that step 601 and step 602 are optional steps. For example, if no communication link needs to be established for data transmission between the first service and the second service, step 601 and step 602 may be omitted. For example, the transport layer transmits data based on the UDP protocol, and does not need to establish a communication link. In this case, step 601 and step 602 may be omitted.

The following describes the data sending process by using an example in which no communication link needs to be established for the data transmission between the first service and the second service. The protocol stack performs step 610 and step 620. In a data sending process, an addressing operation is performed based on first application information, that is, a real address of the second service is determined, or real link information of the service packet is determined. The addressing operation may be implemented through rule matching in the data sending process. In the data sending process, if the rule matching check succeeds, addressing succeeds. After the addressing succeeds, data transmission can be implemented based on the link information. If the rule matching check fails, addressing fails. After the addressing fails, the current data sending process may be ended.

The following briefly describes the data sending process.

Optionally, step 620 includes: when the first application information meets the first rule in the first control policy library, sending the service packet to the second service. The first rule is related to the first application information.

The first rule is related to the first application information, that is, the first rule matches the first application information.

Optionally, the first rule indicates that the first service is allowed to access the second service.

In other words, the first rule is used to determine whether the first service can communicate with the second service.

In other words, the first rule indicates that sending of the service packet is allowed.

For related descriptions of the first rule, refer to the foregoing descriptions. Details are not described herein again.

Further, when the first application information does not meet the first rule, first error information is returned to the first service, where the first error information indicates that the service packet cannot be sent to the second service.

The first control rule library may include one first rule, or may include a plurality of first rules.

For example, step 620 may include: when the first application information meets all first rules in the first control rule library, sending the service packet to the second service.

Optionally, step 620 may include: when the first application information meets the first rule and the second rule in the first control policy library, adjusting the service packet according to the second rule, and sending the adjusted service packet.

The second rule is related to the first application information, that is, the second rule matches the first application information.

Optionally, the second rule indicates to adjust the service packet.

For example, the second rule indicates to modify at least one of the following: link information of the service packet, application layer information of the service packet, or the like.

For example, the second rule indicates to modify link information of the service packet, application layer information of the service packet, or the like.

For example, that the link information of the service packet is adjusted according to the second rule may include that a target second service instance in the second service is determined based on the first application information and the second rule, where the target second service instance is used to provide a service for the first service; and the link information is adjusted based on address information of the target second service instance.

For related descriptions of the second rule, refer to the foregoing descriptions. Details are not described herein again.

In the foregoing data sending process, a rule matching process may alternatively be considered as an addressing process based on the application layer information. If the foregoing addressing process is completed at the transport layer, the process may also be referred to as a layer 4 addressing process based on the application layer information, that is, the application layer information and the link information may be jointly used as addressing factors, so as to determine the real address of the target service. If the check succeeds during the rule matching, the addressing succeeds. After the addressing succeeds, the service packet can be sent.

FIG. 12 is a diagram of a data sending process according to an embodiment of this application.

A main difference between FIG. 11 and FIG. 12 lies in that a pseudo link establishment process and a link establishment operation do not need to be performed. For specific descriptions, refer to the related descriptions of FIG. 11. Details are not described herein again.

According to the solution in this embodiment of this application, the first application information includes the application layer information. In a process in which the first service accesses the second service, the protocol stack may use the application layer information as an addressing factor. For example, the application layer information and the link information are jointly used as addressing factors of the transport layer. Addressing is performed based on a result of matching between the first control policy library and the first application information, to implement data transmission. In this way, application-oriented management and control can be implemented without establishing an additional communication link in the system, to improve management and control effect without an extra delay introduced due to management and control, and ensure service access experience. For example, in a scenario in which management and control are not performed, one communication link may be established between the first service and the second service to implement data transmission. After the solution in this embodiment of this application is used, only one communication link may be established between the first service and the second service to implement data transmission, and management and control are also implemented.

A traffic management scenario is used as an example. In this embodiment of this application, traffic management may be implemented in the protocol stack based on information at the application layer, to determine a real communication peer end and implement data transmission. In this way, application-oriented traffic management can be implemented without establishing an additional communication link in the system, to improve a traffic management effect without an additionally introduced delay, and ensure service access performance. According to the solution in this embodiment of this application, overheads such as a service access delay and a throughput can be basically consistent with overheads in a service passthrough scenario while a function of a service mesh is implemented. For example, in a 400 persistent connection scenario, compared with a native service mesh, a TP 90 using the solution in this embodiment of this application has a lower delay and a higher throughput. Compared with that of an open-source grid solution, a memory overhead introduced by a grid solution is reduced by one order of magnitude, and the CPU overhead is almost zero.

It should be noted that, in the scenario 1, only an example in which the first service accesses the second service is used for description. In an actual scenario, the second service may access the first service. In this case, the first service may invoke the protocol stack to perform a receiving process. In the receiving process, the foregoing step 610 and step 620 may also be performed. This is not limited in this embodiment of this application.

### Scenario 2

The scenario 2 is a data retransmission scenario. For example, the first service sends a service packet to the second service, and the second service does not return response information of the service packet. The response information may be acknowledgment information of the service packet.

Optionally, the service packet is sent by the first service to the second service. Step 620 includes: when no response information of the service packet is received from the second service within a first time period, performing the following operations based on the first application information and the first control policy library: performing a retransmission operation on the service packet, or returning second error information to the first service, where the error information indicates that no response information of the service packet is received, or the like. For example, the retransmission may include immediate retransmission, delay retransmission, or the like.

It should be understood that the foregoing operations are merely examples. When no response information is received before timeout, the protocol stack may further perform another operation based on matching between the first application information and the rule in the first control policy library. This is not limited in this embodiment of this application.

For example, when the first application information matches at least one rule in the first control policy library, the foregoing operation is performed on the service packet.

If the first application information does not match any rule in the first control policy library, that is, the matching fails, a default timeout retransmission process may be performed.

In an example, the foregoing rule matching process may be implemented by using a hook function. If the matching fails, the hook function exits.

When the first application information matches at least one rule in the first control policy library, a corresponding operation may be performed on the service packet based on a rule that the first application information meets.

For example, the rule #1 indicates immediate retransmission, the rule 2# indicates delay retransmission, and the rule 3# indicates to return second error information. The immediate retransmission is performed when the first application information meets the rule #1. The delay retransmission is performed when the first application information meets the rule #2. An error is reported to the first service when the first application information meets the rule #3.

In this embodiment of this application, the first application information includes the application layer information. In a data retransmission scenario, the protocol stack may use the application layer information as reference information to determine a specific operation manner for the service packet. This provides a more comprehensive determining basis for processing the service packet, and helps improve accuracy of a manner of processing the service packet. In this way, application-oriented retransmission processing can be implemented without establishing an additional communication link in the system. This improves accuracy of the service packet processing manner without introducing an additional delay, and ensures service access performance.

It should be understood that the foregoing describes the scenario 2 by using only a timeout retransmission scenario as an example. In another retransmission scenario, for example, a fast retransmission scenario, the method in this embodiment of this application may also be used, provided that a rule in the first control policy library is configured as a corresponding rule.

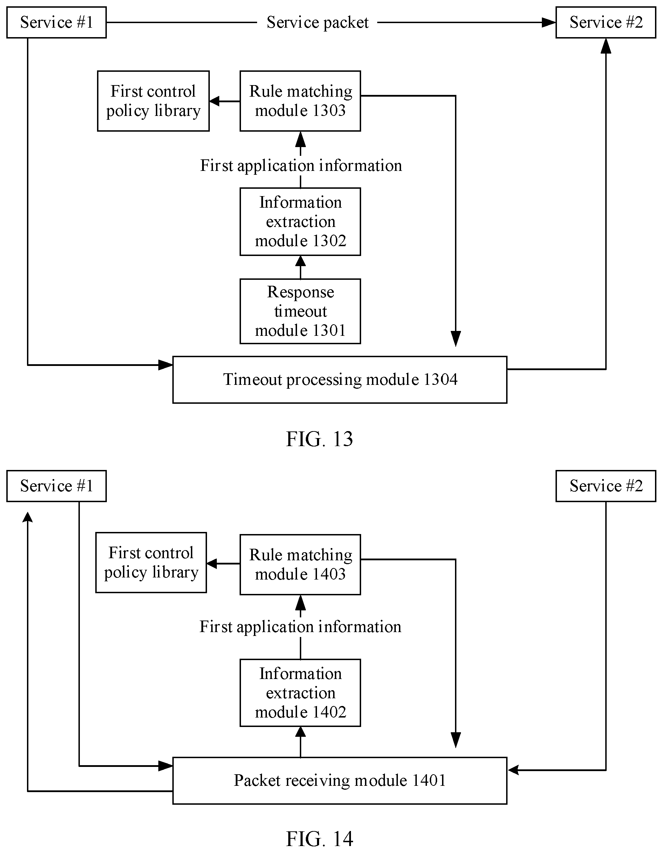

FIG. 13 is a schematic flowchart of a timeout retransmission process. The process shown in FIG. 13 may be considered as a specific implementation of the method shown in FIG. 6. For specific descriptions, refer to related descriptions of FIG. 6 in the scenario 2. The following describes the method 600 by using an example with reference to FIG. 13.

As shown in FIG. 13, the protocol stack may include a response timeout module 1301, an information extraction module 1302, a rule matching module 1303, and a timeout processing module 1304. The information extraction module 1302 in FIG. 13, the information extraction module 702 in FIG. 7, and the information extraction module 902 in FIG. 9 may be the same or different. The rule matching module 1303 in FIG. 13, the rule matching module 703 in FIG. 7, and the rule matching module 903 in FIG. 9 may be the same or different. The response timeout module 1301 may be a timer for waiting for a response.

For example, all the foregoing modules may be located at a transport layer.

Alternatively, some of the foregoing modules may be located at the transport layer. For example, the response timeout module 1301 and the timeout processing module 1304 may be located at the transport layer.

In an example, the plurality of modules may be implemented in a manner of a plurality of processes.

Step 1: A service #1 (an example of a first service) sends a service packet to a service #2 (an example of a second service).

The response timeout module 1301 times out if no response information of the service packet is received within a predetermined period. The information extraction module 1302 extracts the first application information of the service packet. The rule matching module 1303 performs rule matching on the first application information based on the first control policy library. The timeout processing module 1304 performs a corresponding operation based on a rule matching result. For example, the protocol stack may specifically perform the following steps.

Step 2: The response timeout module 1301 indicates timeout if no response information of the service packet is received within the predetermined period.

Step 3: The information extraction module 1302 extracts first application information of the service packet, for example, application layer information and link information.

Step 4: The rule matching module 1303 matches the first application information with a rule in the first control policy library.

If no rule is matched, that is, the matching fails, step 5 is performed. If at least one rule is matched, that is, the matching succeeds, step 6 is performed.

Step 5: The rule matching module 1303 returns matching failure indication information to a timeout processing module 1304.

The timeout processing module 1304 may execute a conventional timeout retransmission process.

Step 6: The rule matching module 1303 checks the first application information according to the at least one matched rule.

The rule matching module 1303 may notify, according to the rule met by the first application information, the timeout processing module 1304 to perform a corresponding operation.

Step 7: The timeout processing module 1304 performs a corresponding operation, for example, immediate retransmission, delay retransmission, or error reporting, based on information returned by the rule matching module.

It should be understood that the modules in FIG. 13 and operations performed by the modules are merely examples, and constitute no limitation on the solutions in this embodiment of this application. For example, the foregoing steps may alternatively be performed by a same module.

### Scenario 3

The scenario 3 is an out-of-order reassembly scenario. For example, the second service sends a service packet to the first service, and sequence numbers of the service packets are out of order, that is, sequence numbers of data packets are out of order. The first service invokes the protocol stack to receive the service packet.

Optionally, step 620 includes: performing at least one of the following operations based on the first application information and the first control policy library: reassembling the sequence number, discarding the service packet, or the like.

It should be understood that the foregoing operations are merely examples. When sequence numbers of received data packets are out of order, based on matching between the first application information and a rule in the first control policy library, the protocol stack may further perform another operation, for example, not reassemble sequence numbers; for another example, return error information to the first service, to notify that sequence numbers of data packets of the first service are out of order; for another example, return error information to the second service, to notify that sequence numbers of data packets of the second service are out of order; for another example, send indication information to the second service, to indicate the second service to resend a corresponding data packet. This is not limited in this embodiment of this application.

For example, when the first application information matches at least one rule in the first control policy library, at least one of the following operations is performed on the service packet: reassembling a sequence number or discarding.

If the first application information does not match any rule in the first control policy library, that is, the matching fails, a default out-of- order reassembly process may be performed.

In an example, the foregoing rule matching process may be implemented by using a hook function. If the matching fails, the hook function exits.

When the first application information matches at least one rule in the first control policy library, a corresponding operation may be performed on the service packet based on a rule that the first application information meets.

For example, the rule #1 indicates to reassemble a sequence number, and the rule 2# indicates discarding. The sequence number of the service packet is reassembled when the first application information meets the rule #1. The service packet is discarded when the first application information meets the rule #2.

FIG. 14 is a schematic flowchart of an out-of-order reassembly process. The process shown in FIG. 14 may be considered as a specific implementation of the method shown in FIG. 6. For specific descriptions, refer to related descriptions of FIG. 6 in the scenario 3. The following describes the method 600 by using an example with reference to FIG. 14.

As shown in FIG. 14, a protocol stack may include a packet receiving module 1401, an information extraction module 1402, and a rule matching module 1403. The information extraction module 1402 in FIG. 14, the information extraction module 1302 in FIG. 13, the information extraction module 702 in FIG. 7, and the information extraction module 902 in FIG. 9 may be the same or different. The rule matching module 1403 in FIG. 14, the rule matching module 1303 in FIG. 13, the rule matching module 703 in FIG. 7, and the rule matching module 903 in FIG. 9 may be the same or different.

For example, all the foregoing modules may be located at a transport layer.

Alternatively, some of the foregoing modules may be located at the transport layer. For example, the packet receiving module 1401 may be located at the transport layer.

In an example, the plurality of modules may be implemented in a manner of a plurality of processes.

Step 1: A service #2 (an example of a first service) sends a service packet to a service #1 (an example of a second service). The service #1 invokes the protocol stack to receive the service packet.

When the data packets received by the protocol stack are out of order, the information extraction module 1402 extracts first application information of the service packet. The rule matching module 1403 performs rule matching on the first application information based on the first control policy library. The packet receiving module 1301 performs a corresponding operation based on a rule matching result. For example, the protocol stack may specifically perform the following steps.

Step 2: When the data packets received by the protocol stack are out of order, the information extraction module 1402 extracts first application information of the service packet, for example, application layer information and link information.

Step 3: The rule matching module 1403 matches the first application information with a rule in the first control policy library.

If no rule is matched, that is, the matching fails, step 4 is performed. If at least one rule is matched, that is, the matching succeeds, step 5 is performed.

Step 4: The rule matching module 1403 returns matching failure indication information to the packet receiving module 1401.

The packet receiving module 1401 may perform a conventional out-of-order reassembly process.

Step 5: The rule matching module 1403 checks the first application information according to the at least one matched rule.

The rule matching module 1403 may notify, according to the rule met by the first application information, the packet receiving module 1401 to perform a corresponding operation.

Step 6: The packet receiving module 1401 performs a corresponding operation, for example, reassembling a sequence number or discarding, based on information returned by the rule matching module.

It should be understood that the modules in FIG. 14 and operations performed by the modules are merely examples, and constitute no limitation on the solutions in this embodiment of this application. For example, the foregoing steps may alternatively be performed by a same module.

In this embodiment of this application, the first application information includes the application layer information. In an out-of-order reassembly scenario, the protocol stack may use the application layer information as reference information to determine a specific operation manner for the service packet. This provides a more comprehensive determining basis for processing the service packet, and helps improve accuracy of a manner of processing the service packet. In this way, application-oriented reassembly processing can be implemented without establishing an additional communication link in the system. This improves accuracy of the service packet processing manner without introducing an additional delay, and ensures service access experience.

In this embodiment of this application, the foregoing three scenarios are used as examples to describe the method 600. This is merely intended to help a person skilled in the art understand this embodiment of this application, but is not intended to limit this embodiment of this application to a specific scenario shown in the examples. It is clear that a person skilled in the art may make equivalent modifications or variations based on the examples of the foregoing scenarios, and these modifications or variations shall fall within the scope of this embodiment of this application. In another scenario in which application layer information is required to implement management and control, the solutions in embodiments of this application may also be used.

It may be further understood that the solutions in embodiments of this application may be properly combined for use, and explanations or descriptions of terms in embodiments may be mutually referenced or explained in embodiments. This is not limited.

It may be further understood that, in the foregoing method embodiments, methods and operations implemented by the device may alternatively be implemented by a component (for example, a chip or a circuit) of the device.

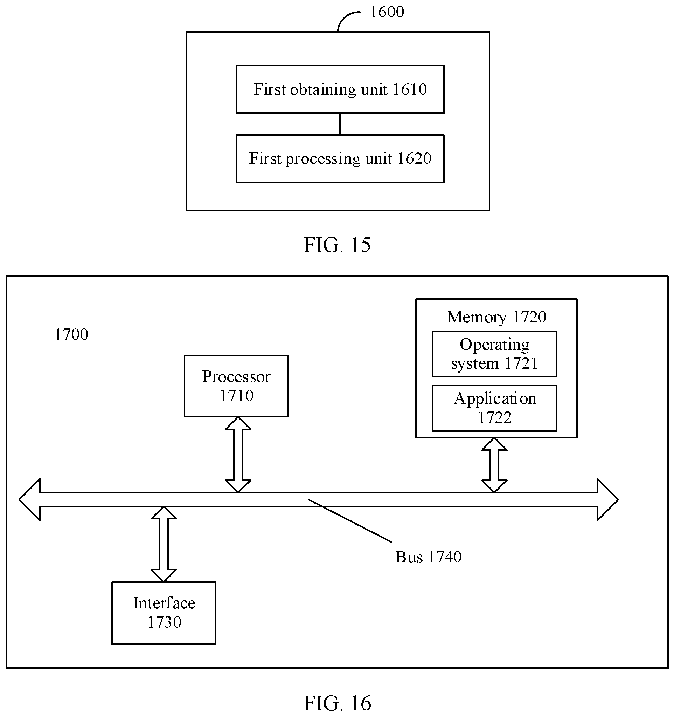

The foregoing describes the data transmission method provided in embodiments of this application with reference to FIG. 1 to FIG. 14. The following describes apparatus embodiments of this application with reference to FIG. 15 to FIG. 16. It should be understood that descriptions of the method embodiments correspond to descriptions of the apparatus embodiments. Therefore, for a part not described in detail, refer to the foregoing method embodiments.

FIG. 15 is a diagram of a data transmission apparatus 1600 according to an embodiment of this application. The apparatus 1600 is used in a communication process between a first service and a second service, and the apparatus 1600 may include a protocol stack invoked by the first service. The protocol stack may be configured to perform the method in embodiments of this application, for example, the method 600 shown in FIG. 6. The protocol stack includes a first obtaining unit 1610 and a first processing unit 1620.

A first transceiver unit 1610 is configured to obtain first application information of a service packet transmitted between the first service and the second service, where the first application information includes application layer information.

A second processing unit 1620 is configured to process the service packet based on the first application information and a first control policy library, where the first control policy library indicates a manner for processing the service packet.

Optionally, the protocol stack further includes a second obtaining unit and a second processing unit (not shown in the figure). The first obtaining unit and the second obtaining unit may be a same unit, or may be different units. The first processing unit and the second processing unit may be a same unit, or may be different units.

The second obtaining unit is configured to: before the first obtaining unit obtains the service packet transmitted between the first service and the second service, obtain a link establishment request initiated by the first service, where the link establishment request is used to request to establish a communication link between the first service and the second service. The second processing unit is configured to return link establishment success indication information to the first service, where before the link establishment success indication information is returned to the first service, no communication link is established between the first service and the second service.

In a possible implementation, the protocol stack may further include a second sending unit (not shown in the figure), configured to return the link establishment success indication information to the first service. The second processing unit may be configured to indicate the second sending unit to return the link establishment success indication information to the first service.

Optionally, the first processing unit 1620 is specifically configured to: establish the communication link between the first service and the second service when the first application information meets a first rule in the first control policy library, where the first rule indicates that the first service is allowed to access the second service, and the communication link is used to transmit the service packet.

Optionally, the first processing unit 1620 is specifically configured to: when the first application information meets the first rule and a second rule in the first control policy library, adjust the service packet according to the second rule, where the second rule indicates to adjust the service packet; and establish the communication link between the first service and the second service, where the communication link is used to transmit the adjusted service packet.

Optionally, the first processing unit 1620 is specifically configured to: return first error information to the first service when the first application information does not meet the first rule, where the first error information indicates that the service packet cannot be sent to the second service.

In a possible implementation, the protocol stack may further include a first sending unit (not shown in the figure), configured to return first error information to the first service. The first processing unit 1620 is specifically configured to: when the first application information does not meet the first rule, indicate the first sending unit to return the first error information to the first service.

Optionally, the second processing unit is specifically configured to: obtain second application information of the link establishment request, where the second application information includes link information of the link establishment request; and return link establishment success indication information to the first service when a second control policy library includes a third rule, where the third rule is related to the second application information.

In a possible implementation, the second processing unit is specifically configured to: obtain second application information of the link establishment request, where the second application information includes link information of the link establishment request; and when a second control policy library includes a third rule, indicate the second sending unit to return link establishment success indication information to the first service.

Optionally, the second processing unit is specifically configured to: return the link establishment success indication information to the first service when the second application information meets the third rule.

In a possible implementation, the second processing unit is specifically configured to: when the second application information meets the third rule, indicate the second sending unit to return the link establishment success indication information to the first service.

Optionally, the service packet is sent by the first service to the second service, and the first processing unit 1620 is specifically configured to: when no response information of the service packet is received from the second service within a first time period, perform at least one of the following operations based on the first application information and the first control policy library: performing a retransmission operation on the service packet, or returning second error information to the first service, where the second error information indicates that no response information of the service packet is received.

Optionally, the service packet is sent by the second service to the first service, and the first processing unit 1620 is specifically configured to: when sequence numbers of the service packets are out of order, perform at least one of the following operations based on the first application information and the first control policy library: reassembling the sequence numbers or discarding the service packet.

Optionally, the first control policy library includes a traffic management rule.

It should be understood that a specific process in which the units perform the foregoing corresponding steps is described in detail in the foregoing method embodiments. For brevity, details are not described herein.

It should be understood that the apparatus 1600 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. A person skilled in the art may understand that the apparatus 1600 may be configured to perform the processes and/or steps in the foregoing method embodiments. To avoid repetition, details are not described herein.

It should be noted that, in another embodiment, each unit may be configured to perform any step of the foregoing data transmission method. For example, the first processing unit may be configured to perform any step in the data transmission method, and the first obtaining unit may be configured to perform any step in an analysis method for a failed use case. Steps that each unit is responsible for implementing may be specified as required, and all functions of the apparatus 1600 are implemented by using different steps in the data transmission method implemented by each unit.

FIG. 16 is a diagram of another data transmission apparatus 1700 according to an embodiment of this application. The apparatus 1700 includes a processor 1710 and a memory 1720. The processor 1710 is configured to execute a computer program or instructions stored in the memory 1720, or read data/signaling stored in the memory 1720, to perform the methods in the foregoing method embodiments. Optionally, there are one or more processors 1710.

The memory 1720 is configured to store the computer program or the instructions and/or the data. The memory 1720 may be integrated with the processor 1710, or may be disposed separately. Optionally, there are one or more memories 1720.

Optionally, as shown in FIG. 16, the apparatus 1700 further includes an interface 1730. The interface 1730 may be implemented in a wireless or wired manner, and may be specifically a network adapter. The processor 1720, the memory 1720, and the interface 1730 are connected by using a bus 1740. The interface 1730 may specifically include a transmitter and a receiver.

For example, the processor 1710 is configured to execute the computer program or the instructions stored in the memory 1720, to implement the method in embodiments of this application.

The memory 1720 includes an operating system 1721 and an application 1722, and is configured to store a program, code, or instructions. When executing the program, the code, or the instructions, the processor or a hardware device may complete the method in this embodiment of this application in method embodiments. Optionally, the memory 1720 may include a read-only memory (read-only memory, ROM) and a random access memory (random access memory, RAM). The ROM includes a basic input/output system (basic input/output system, BIOS) or an embedded system, and the RAM includes an application and an operating system. When a protocol stack needs to be invoked, an application and an operating system run in the RAM, so as to complete a processing process related to the protocol stack in the method embodiments.

It may be understood that FIG. 16 shows merely a simplified design of the data transmission apparatus. In actual application, the data transmission apparatus may include any quantity of interfaces, processors, or memories.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other suitable type of memory.

An embodiment of this application further provides a computer-readable storage medium, where the computer-readable storage medium stores computer instructions used to implement the method performed by a device in the foregoing method embodiments.

For example, when the computer program is executed by a computer, the computer is enabled to implement the methods in the foregoing method embodiments.

The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

An embodiment of this application further provides a computer program product, including instructions. When the instructions are executed by a computer, the method in the foregoing method embodiments is implemented.

An embodiment of this application further provides a chip, and the chip includes: at least one processor, at least one memory, and an interface circuit, where the interface circuit is responsible for information exchange between the chip and the outside, the at least one memory, the interface circuit, and the at least one processor are interconnected by using a line, the at least one memory stores instructions, and the instructions are executed by the at least one processor, to perform the method in embodiments of this application. In a specific implementation process, the chip may be implemented in a form of a central processing unit (central processing unit, CPU), a micro controller unit (micro controller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

For explanations and beneficial effects of related content of any one of the apparatuses provided above, refer to the corresponding method embodiments provided above. Details are not described herein again.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the processes or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but be not limited to various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, applied to a communication process between a first service and a second service, wherein a protocol stack invoked by the first service performs the following steps:
obtaining first application information of a service packet transmitted between the first service and the second service, wherein the first application information comprises application layer information; and
processing the service packet based on the first application information and a first control policy library, wherein the first control policy library indicates a manner for processing the service packet.

2. The method according to claim 1, wherein before the obtaining a service packet transmitted between the first service and the second service, the method further comprises:
obtaining a link establishment request initiated by the first service, wherein the link establishment request is used to request to establish a communication link between the first service and the second service; and
returning link establishment success indication information to the first service, wherein before the link establishment success indication information is returned to the first service, no communication link is established between the first service and the second service.

3. The method according to claim 2, wherein the processing the service packet based on the first application information and a first control policy library comprises:
establishing the communication link between the first service and the second service when the first application information meets a first rule in the first control policy library, wherein the first rule indicates that the first service is allowed to access the second service, and the communication link is used to transmit the service packet.

4. The method according to claim 3, wherein the establishing the communication link between the first service and the second service when the first application information meets a first rule in the first control policy library comprises:
when the first application information meets the first rule and a second rule in the first control policy library, adjusting the service packet according to the second rule, wherein the second rule indicates to adjust the service packet; and
establishing the communication link between the first service and the second service, wherein the communication link is used to transmit the adjusted service packet.

5. The method according to claim 3 or 4, wherein the processing the service packet based on the first application information and a first control policy library comprises:
returning first error information to the first service when the first application information does not meet the first rule, wherein the first error information indicates that the service packet cannot be sent to the second service.

6. The method according to any one of claims 2 to 5, wherein the returning link establishment success indication information to the first service comprises:
extracting second application information of the link establishment request, wherein the second application information comprises link information of the link establishment request; and
returning the link establishment success indication information to the first service when a second control policy library comprises a third rule, wherein the third rule is related to the second application information.

7. The method according to claim 6, wherein the returning the link establishment success indication information to the first service when a second control policy library comprises a third rule comprises:
returning the link establishment success indication information to the first service when the second application information meets the third rule.

8. The method according to claim 1, wherein the service packet is sent by the first service to the second service, and the processing the service packet based on the first application information and a first control policy library comprises:
when no response information of the service packet is received from the second service within a first time period, performing at least one of the following operations based on the first application information and the first control policy library:
performing a retransmission operation on the service packet; or
returning second error information to the first service, wherein the second error information indicates that no response information of the service packet is received.

9. The method according to claim 1, wherein the service packet is sent by the second service to the first service, and the processing the service packet based on the first application information and a first control policy library comprises:
when sequence numbers of the service packets are out of order, performing at least one of the following operations based on the first application information and the first control policy library: reassembling the sequence numbers or discarding the service packets.

10. The method according to any one of claims 1 to 9, wherein the first control policy library comprises a traffic management rule.

11. A data transmission apparatus, used in a communication process between a first service and a second service and comprising a protocol stack invoked by the first service, wherein the protocol stack comprises:
a first obtaining unit, configured to obtain first application information of a service packet transmitted between the first service and the second service, wherein the first application information comprises application layer information; and
a first processing unit, configured to process the service packet based on the first application information and a first control policy library, wherein the first control policy library indicates a manner for processing the service packet.

12. The apparatus according to claim 11, wherein the protocol stack further comprises:
a second obtaining unit, configured to: before the first obtaining unit obtains the service packet transmitted between the first service and the second service, obtain a link establishment request initiated by the first service, wherein the link establishment request is used to request to establish a communication link between the first service and the second service; and
a second processing unit, configured to return link establishment success indication information to the first service, wherein before the link establishment success indication information is returned to the first service, no communication link is established between the first service and the second service.

13. The apparatus according to claim 12, wherein the first processing unit is specifically configured to:
establish the communication link between the first service and the second service when the first application information meets a first rule in the first control policy library, wherein the first rule indicates that the first service is allowed to access the second service, and the communication link is used to transmit the service packet.

14. The apparatus according to claim 13, wherein the first processing unit is specifically configured to:
when the first application information meets the first rule and a second rule in the first control policy library, adjust the service packet according to the second rule, wherein the second rule indicates to adjust the service packet; and
establish the communication link between the first service and the second service, wherein the communication link is used to transmit the adjusted service packet.

15. The apparatus according to claim 13 or 14, wherein the first processing unit is specifically configured to:
return first error information to the first service when the first application information does not meet the first rule, wherein the first error information indicates that the service packet cannot be sent to the second service.

16. The apparatus according to any one of claims 12 to 15, wherein the second processing unit is specifically configured to:
obtain second application information of the link establishment request, wherein the second application information comprises link information of the link establishment request; and
return the link establishment success indication information to the first service when a second control policy library comprises a third rule, wherein the third rule is related to the second application information.

17. The apparatus according to claim 16, wherein the second processing unit is specifically configured to:
return the link establishment success indication information to the first service when the second application information meets the third rule.

18. The apparatus according to claim 11, wherein the service packet is sent by the first service to the second service, and the first processing unit is specifically configured to:
when no response information of the service packet is received from the second service within a first time period, perform at least one of the following operations based on the first application information and the first control policy library:
performing a retransmission operation on the service packet; or
returning second error information to the first service, wherein the second error information indicates that no response information of the service packet is received.

19. The apparatus according to claim 11, wherein the service packet is sent by the second service to the first service, and the first processing unit is specifically configured to:
when sequence numbers of the service packets are out of order, perform at least one of the following operations based on the first application information and the first control policy library: reassembling the sequence numbers or discarding the service packets.

20. The apparatus according to any one of claims 11 to 19, wherein the first control policy library comprises a traffic management rule.

21. A data transmission apparatus, comprising:
a processor, configured to execute a computer program stored in a memory, so that the apparatus performs the method according to any one of claims 1 to 10.

22. The apparatus according to claim 21, wherein the apparatus further comprises the memory.

23. A computer-readable storage medium, wherein the computer-readable storage medium stores a computer program, and when the computer program is run on a computer, the computer is enabled to perform the method according to any one of claims 1 to 10.

24. A computer program product, wherein the computer program product comprises instructions for performing the method according to any one of claims 1 to 10.
